# FASCICULE DE BREVET EUROPEEN

(11) **EP 1 915 725 B1**
(45) Date de publication et mention de la délivrance du brevet: **03.12.2008**
(21) Numéro de dépôt: 06778903.2
(22) Date de dépôt: 21.07.2006
(51) Int. Cl.: G06K 17/00, G06K 19/08

(54) **DISPOSITIF DE LECTURE OPTIQUE ET D'ENCODAGE RADIOF REQUENCE ADAPTABLE EN SORTIE D'IMPRIMANTE D'ETIQUETTES D' IDENTIFICATION**
IDENTIFIKATIONSEINRICHTUNG ZUM OPTISCHEN LESEN UND HOCHFREQUENZCODIERUNG, ANPASSUNGSFÄHIG IN EINER IDENTIFIKATIONSLABEL-DRUCKERAUSGABE
D' IDENTIFICATION DEVICE FOR OPTICAL READING AND RADIO FREQUENCY ENCODING ADAPTABLE IN IDENTIFICATION LABEL PRINTER OUTPUT

(30) Priorité: 22.07.2005 FR 0507825
(43) Date de publication de la demande: 30.04.2008
(73) Titulaire: ASK S.A., 06560 Valbonne Sophia Antipolis (FR)
(72) Inventeur: SUREAUD, Jean, F-06700 Saint Laurent du VAR (FR); BRANDIN, Guillaume, F-06330 Roquefort les pins (FR); SABBAH, Elias, F-06250 Mougins (FR)
(86) Numéro de dépôt international: PCT/FR2006/001787
(87) Numéro de publication internationale: WO 2007/010146

(56) Documents cités:
- EP-A- 1 538 552
- US-A1- 2002 113 707

## Description

### Domaine technique

La présente invention concerne les lecteurs de code à barre pour étiquettes d'identification de bagages ou autres et concerne en particulier un dispositif de lecture optique et d'encodage radiofréquence adaptable en sortie d'imprimante d'étiquettes d'identification.

### Etat de la technique

Les étiquettes d'identification utilisées pour les bagages dans les avions sont toutes munies d'un code à barres. Le code à barres contient des données et des informations d'identification du bagage qui permettent ainsi de répertorier le bagage et de l'identifier lors de son enregistrement, de son chargement et de son déchargement. Le code à barre peut contenir des informations d'identification du bagage, de son propriétaire, du numéro du vol, etc. Cependant, pour des raisons de fiabilité et de sécurité le système d'identification de telles étiquettes tend à être remplacé par un système radiofréquence comprenant une puce électronique contenant les informations et une antenne permettant l'échange des données avec un lecteur à distance également muni d'une antenne, la puce et l'antenne étant connectées ensemble. La technique d'identification de type radiofréquence peut se substituer ou s'ajouter aux techniques d'identification à code à barres plus traditionnelles. Cependant, le problème qui ressort d'une telle technique est la difficulté et le coût de la mise en place de système de lecture/écriture de type radiofréquence pour de telles étiquettes dans tous les aéroports du monde, ce qui démontre la nécessité de garder les deux types de système de lecture. Les étiquettes dites « mixtes » donc à la fois munie d'un code à barres et d'un système de type radiofréquence vont s'étendre ainsi à tous le marché de l'identification des bagages.

Le problème qui se pose alors est la modification du système de lecture/écriture installé aujourd'hui dans les aéroports qui ne permet que la lecture des étiquettes d'identification à codes à barres. Il existe donc des dispositifs capable de créer un code à barres pour y transposer les informations codées et à encoder la puce avec les mêmes informations. Il existe des imprimantes capable d'émettre des étiquettes d'identification pour bagages, ces étiquettes offrant à la fois une lecture optique et une lecture radiofréquence. Ces imprimantes sont capable d'imprimer un code à barres sur une étiquette d'identification munie d'un système radiofréquence et d'encoder simultanément la puce. Un tel dispositif est décrit dans le document EP-A-1 538 552. Ce type d'imprimante pourrait ainsi remplacer les imprimantes d'émission d'étiquettes d'identification à code à barres aujourd'hui sur le marché. Un des problèmes majeur de cette solution réside dans le coût que représente un tel remplacement. Ce remplacement semble d'autant plus inapproprié que les imprimantes d'étiquettes d'identification à code à barres pour bagages sont fiables et performantes.

### Exposé de l'invention

C'est pourquoi le but de l'invention est de fournir un dispositif portatif capable de s'adapter en sortie des imprimantes standard d'étiquettes à code à barres, capable de lire le code à barres de l'étiquette produite par l'imprimante et de venir encoder la puce de la même étiquette avec les informations lues et ce, sans aucune modification et interaction nécessaires avec le système mis en place dans lequel s'insère l'imprimante.

L'objet de l'invention est donc un dispositif selon la revendication 1.

### Description brève des figures

Les buts, objets et caractéristiques de l'invention apparaîtront plus clairement à la lecture de la description qui suit faite en référence aux dessins dans lesquels :
La figure 1 représente un schéma fonctionnel et de principe du dispositif selon l'invention,
La figure 2 représente une vue en perspective du dispositif selon l'invention,
La figure 3 représente une vue en perspective de l'imprimante d'étiquettes pour bagages,
La figure 4 représente une vue en perspective du dispositif selon l'invention dans sa position opérationnelle avec l'imprimante.

### Description détaillée de l'invention

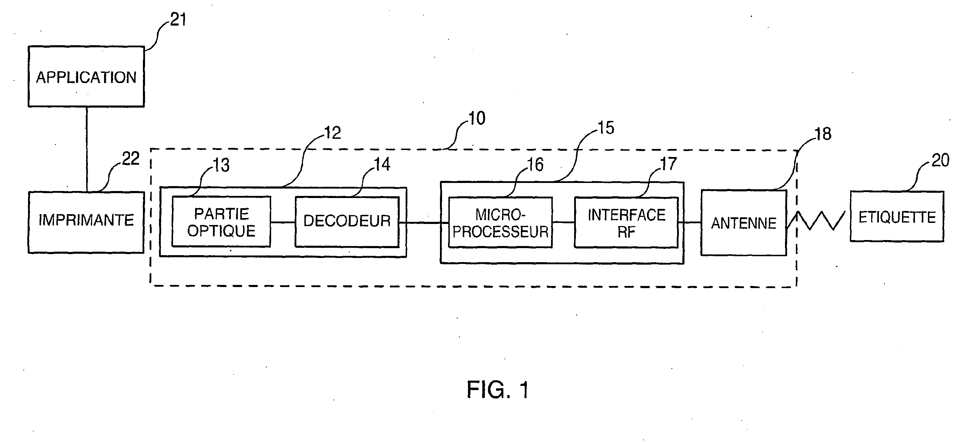

Selon le schéma de principe de la figure 1, le dispositif 10 selon l'invention est placé en sortie d'imprimante 22, elle-même reliée à une application 24 de type enregistrement des bagages pour le compte d'une compagnie aérienne. L'imprimante est intégrée à un comptoir d'enregistrement et est connectée à distance à la base de données de la compagnie aérienne. L'imprimante servant à éditer des étiquettes à code imprimé tel qu'un code à barres délivre des étiquettes qui sont directement utilisées par un opérateur. Les étiquettes sont également munies d'un système radiofréquence comprenant une antenne et une puce électronique connectées ensemble. Le dispositif selon l'invention comprend un lecteur de code à barre 12 ne comportant pas de pièces mécaniques en mouvement donc de préférence de type CCD (Dispositif à transfert de charge). Le lecteur optique à capteur CCD comprend deux parties distinctes, une partie optique 13 destinée à lire le code à barres et une partie logique 14 destinée à décoder l'information lue (décodeur) de façon à le convertir en données numériques. La partie optique 13 comprend d'une part un dispositif d'éclairage destiné à éclairer le code à barres qui peut être constitué d'une ou plusieurs diodes électroluminescentes de façon à éclairer en lumière visible ou en infrarouge le code à barres et d'autre part un dispositif de détection de la lumière réfléchie par le code. Ainsi, le signal lumineux réfléchie par le code à barres est ensuite transformé en un signal électrique par le capteur CCD grâce à un système à base de phototransistors. Le signal électrique est ensuite traité par le décodeur 14 afin que les informations contenues dans le code à barres puissent être transmises à la puce sous forme d'informations numériques. Pour cela, une unité de dialogue radiofréquence 15 permet grâce à un microprocesseur 16 de traiter le signal numérique provenant du décodeur 14 donc provenant de la partie logique du lecteur. Une interface radiofréquence 17 qui joue le rôle d'émetteur récepteur reçoit les informations du microprocesseur 16 et les transmet à la puce électronique 28 de l'étiquette 20. Inversement, l'interface RF 17 est capable de récupérer les informations d'identifications contenues dans les étiquettes et de les transmettre au microprocesseur 16. L'interface radiofréquence 17 permet ainsi la modulation et la démodulation des signaux afin d'assurer d'une part la transmission des données jusqu'à l'étiquette 20 et d'autre part la lecture des données de l'étiquette. Ainsi, les informations correspondant au code barres lu sont encodées dans la puce. Les échanges d'informations sont assurées grâce à une antenne 18 située dans le dispositif selon l'invention 10 communiquant avec l'antenne de l'étiquette 20. Le décodeur 14 peut également faire partie du microprocesseur 16 sans que cela sorte du cadre de l'invention.

Le dispositif 10 dispose d'une interface utilisateur reliée à l'unité de dialogue radiofréquence 15 de façon à ce que l'utilisateur détecte immédiatement les mauvaises transactions entre l'étiquette 20 et le dispositif 10.

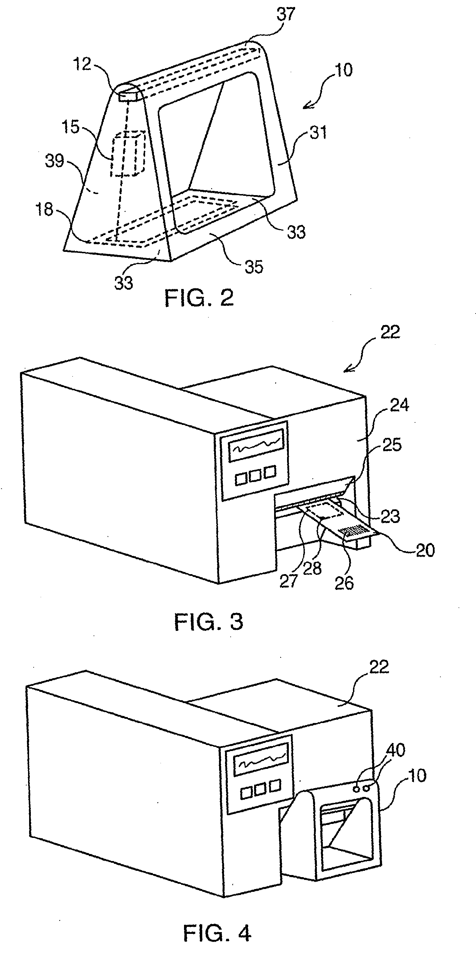

Selon la figure 2, le dispositif 10 selon l'invention dispose d'une large ouverture 31 de préférence de forme rectangulaire permettant le passage d'un objet tel qu'une étiquette à bagages. Le dispositif 10 tel qu'il est représenté présente une partie inférieure ou base 33 plus large que la partie supérieure 37, une face avant 35 et une face arrière 39 destinée à venir se plaquer contre la face de l'imprimante par laquelle l'étiquette sort. L'antenne 18 est logée de préférence dans la base 33 du dispositif 10 parallèlement à l'un des côtés de l'ouverture 31. La partie optique 13 du lecteur optique 12 est placée de préférence à l'opposé de l'antenne 18, le long de la partie supérieure 37 du dispositif faisant face à la base 35 du dispositif. La partie optique 13 et l'antenne 18 sont donc situées en face l'une de l'autre et de part et d'autre de l'ouverture 31, l'antenne 18 étant située du côté de l'ouverture où la largeur du dispositif est la plus grande. La partie optique 13 est positionnée de façon à ce que le faisceau lumineux produit par le dispositif d'éclairage forme un plan parallèle au plan de la face arrière 39 du dispositif. Cependant, l'orientation du faisceau lumineux peut être modifiable grâce à un dispositif d'éclairage monté sur une liaison pivotante.

L'alimentation du dispositif 10, non représentée sur les figures, peut être assurée par une batterie intégrée ou être reliée au secteur.

L'imprimante 22 à étiquettes à code à barres est représentée en perspective sur la figure 3. Elle présente sur sa face avant 24 une ouverture ou sortie 23 par laquelle l'étiquette imprimée 20 sort. La sortie 23 peut être située sur une partie inclinée 25 par rapport au reste de la face avant, l'angle entre la face avant 24 et la partie inclinée 25 étant en général inférieur ou égal à 45°. L'étiquette 20 sort généralement perpendiculairement à la face 25 de l'imprimante. Selon le modèle de l'imprimante, l'étiquette est automatiquement découpée lors de sa sortie ou bien un opérateur la découpe en la maintenant en appui le long d'une arête prévue à cette effet et située en général le long du bord supérieur de l'ouverture 23. L'étiquette 20 comprend un code à barres 26 disposé parallèlement au petit côté de l'étiquette, une antenne 27 et une puce 28 connectées ensemble.

La figure 4 représente une vue en perspective de l'imprimante 22 et du dispositif 10 selon l'invention en position opérationnelle. Le dispositif 10 est placé contre l'imprimante 22 de façon à ce que l'ouverture 31 soit positionnée autour de la sortie 23 des étiquettes afin qu'aucune partie du dispositif 10 ne vienne gêner la sortie des étiquettes. La face arrière 39 du dispositif 10 est plaquée contre la face 25 de l'imprimante sur laquelle se trouve la sortie 23 des étiquettes de sorte que le faisceau lumineux produit par le dispositif d'éclairage soit dirigé parallèlement à la face 25. Ainsi, le faisceau lumineux est dirigé perpendiculairement aux étiquettes sortantes de l'imprimante par la sortie 23 située sur le plan 25. La forme du dispositif 10 est adaptée de façon à venir s'ajuster contre l'imprimante 22 à proximité de la sortie des étiquettes sans gêner leur sortie. Le dispositif 10 est posé sur le support sur lequel est posée l'imprimante tel que représenté sur la figure 4 ou bien il peut être monté coulissant le long d'un pied posé à proximité de l'imprimante ou bien il peut également être fixé directement sur l'imprimante grâce à des moyens de fixation tels que des ventouses. Lorsque le dispositif 10 est posé sur le support sur lequel est posée l'imprimante, il peut également comporter des moyens de fixation tels que des ventouses destinés à garantir le maintien du bon positionnement du dispositif par rapport à l'imprimante. Lorsque le dispositif 10 est en place, l'angle entre le plan de la base du dispositif et le plan 25 de l'imprimante comprenant la sortie 23 des étiquettes est compris entre 45° et 90°. De cette façon, en sortie d'imprimante les étiquettes forment avec le plan de l'antenne 18 située dans le plan de la base du dispositif un angle compris entre 0° et 45°.

Le côté supérieur de l'ouverture 31 c'est à dire celui dans lequel est logé le lecteur optique 12 se trouve alors au dessus de la sortie 23 parallèlement à celle-ci. Dans cette configuration, le dispositif 10 ne doit pas gêner la découpe de l'étiquette lorsqu'elle est réalisée manuellement par un opérateur.

En fonctionnement, lorsqu'une étiquette à code à barres est éditée par l'imprimante 22, elle est éjectée par la sortie 23, le code à barres en premier. Dés que l'étiquette commence à sortir de l'imprimante, elle passe par l'ouverture 31 du dispositif 10 de façon à ce que les informations et les données du code à barres soient lues en premier par le lecteur optique 12. Les informations et les données du code à barres de l'étiquette sont alors transformées en signaux électriques par le capteur CCD puis en données numériques par le décodeur 14. Alors que l'étiquette n'est pas totalement sortie de l'imprimante, les informations provenant du décodeur sont transmises à l'étiquette par l'unité de dialogue radiofréquence 15. Un contrôle des informations transmises à l'étiquette est réalisé immédiatement après. Pour cela, un signal d'interrogation est envoyé par l'émetteur récepteur de l'unité de dialogue radiofréquence 15 à l'étiquette de façon à lire les données contenues dans la puce de l'étiquette et de les comparer avec les données lues du code à barres gardées en mémoire dans le microprocesseur 16. L'interface utilisateur est composé par exemple de un
ou deux voyants lumineux 40 indiquant grâce à un code de couleur si les informations contenues dans la puce de l'étiquette sont en conformité avec les informations lues.

Le temps nécessaire à l'échange des données est rapide de l'ordre de 100 à 300 ms, un tiers de temps étant nécessaire à l'échange de données par radiofréquence. Sachant que l'étiquette doit rester dans le champ électromagnétique de l'antenne du lecteur pendant toute la durée de la transaction, l'antenne du lecteur doit être dimensionnée de façon à ce que cette condition soit toujours remplie quelle que soit la vitesse de sortie des étiquettes. La vitesse de sortie des étiquettes de l'imprimante peut atteindre une vitesse élevée de l'ordre de 20 cm/s. Dans le cas le plus défavorable en terme de rapidité de durée de transaction, dans lequel l'antenne est située très proche du code imprimé, et pour une vitesse de sortie des étiquettes de 20cm/s, l'étiquette devra être « vue » par le lecteur sur 6 cm.

Le code à barres de l'étiquette 20 peut être remplacé par des caractères lisibles, dans ce cas le lecteur optique 12 est un lecteur de caractères optiques de type OCR (Optical Character Reader) et cette possibilité ne sort pas du cadre de l'invention. De plus le sens du code à barres ou des caractères inscrits sur l'étiquette peut être perpendiculaire au grand côté de l'étiquette. De façon générale, le lecteur optique 12 est un lecteur capable de transformer les informations du code imprimé sur un objet tel qu'une étiquette 20 en données numériques.

Selon un premier mode de réalisation de l'invention, la fréquence de fonctionnement du dispositif est 13,56 MHz telle que définie dans les normes ISO 14443 et 15693. Dans ce cas, les antennes 18 et 27, de type magnétique, comportent une ou plusieurs spires et les échanges de données entre les deux antennes 18 et 27 sont optimals lorsque les deux antennes sont parallèles, ainsi le champ électromagnétique fourni par l'antenne 18 du dispositif se referme perpendiculairement au plan de l'étiquette.

Selon une variante du premier mode de réalisation de l'invention, l'antenne 18 du dispositif 10 peut être située dans la face avant 35 du dispositif 10 de façon à ce que les spires d'antenne entourent l'ouverture 31. Dans le cas par exemple où les étiquettes forment avec le plan de la base du dispositif 10 un angle égal à 45° lorsque elles sortent de l'imprimante 22, l'angle entre les plans des antennes 27 et 18 est alors égal à environ 45°. Les échanges de données entre l'étiquette et le dispositif 10 sont alors possible.

Selon une autre variante du premier mode de réalisation de l'invention, l'antenne 18 comprend deux groupes de spires dans lequel un premier groupe de une ou plusieurs spires est situé dans le plan de la base 33 du dispositif 10 et un second groupe de une ou plusieurs spires est situé dans la face avant 35 du dispositif 10 de façon à ce que les deux groupes de spires sont situés sur deux plans formant un angle compris entre 45 et 90°. Les sens d'enroulement des deux groupes de spires étant les mêmes de façon à produire un champ électromagnétique dont l'orientation est optimisée par rapport à l'étiquette. En effet, l'étiquette passe à travers l'ouverture 31 du dispositif 10 en faisant un angle compris entre 0° et 45° avec la base 33 du dispositif du fait de l'orientation inclinée de la face avant de l'imprimante où se situe la sortie 23 des étiquettes. Par conséquent, dans l'ouverture 31 à l'endroit du passage de l'étiquette 20, il existe un champ électromagnétique dont la composante qui est perpendiculaire à l'étiquette (donc la composante la plus utile) a une valeur qui est la résultante des composantes dues aux deux groupes de spires et donc qui est plus importantes que la composante perpendiculaire à l'étiquette de chaque groupe de spires pris séparément.

Cette variante du premier mode de réalisation a l'avantage de garantir la communication entre l'étiquette et le dispositif selon l'invention quelle que soit l'imprimante et en particulier quelle que soit la direction prise par l'étiquette lors de sa sortie de l'imprimante. En effet, le couplage électromagnétique entre l'étiquette et le dispositif sera minimum si l'angle entre les plans des deux antennes est perpendiculaire. Ce cas peut intervenir si le plan de sortie des étiquettes 25 de l'imprimante est perpendiculaire au plan 35 de la base du dispositif 10 et dans laquelle est logée l'antenne. Dans cette configuration, l'étiquette peut ne pas être détectée par le dispositif 10 et la communication entre l'étiquette et le dispositif peut ne pas se faire. Par conséquent, la combinaison de deux groupes de spires formant entre eux un angle non nul garantit la communication entre l'étiquette et le dispositif 10 quelle que soit la configuration géométrique de l'imprimante.

Selon un second mode de réalisation de l'invention, les fréquences de fonctionnement du dispositif 10 se situent dans la bande des Ultra Hautes Fréquences (UHF) de l'ordre du GHz (fréquence européenne et américaine dans la bande 860 - 960 MHz et fréquence de 2,45 GHz selon la norme ISO 18001). Dans ce cas, l'antenne 18 est située de façon préférentielle dans la partie la plus large du dispositif 10 donc dans la partie inférieure ou base 33 tel que représenté sur la figure 2. De plus, l'antenne 18 devra être de faible portée de façon à échanger des données avec l'étiquette sortante de l'imprimante, donc celle située la plus proche de l'antenne 18.

De façon générale, le dispositif selon l'invention présente l'avantage de s'insérer dans un système existant eh impliquant aucune modification de celui-ci. En effet, située à la sortie d'une imprimante classique d'étiquettes d'identification dont les données sont inscrites dans un code imprimé (caractères lisibles ou code à barres), les étiquettes étant de type sans contact radiofréquence, le dispositif selon l'invention permet de transcrire les informations imprimées vers la puce du système radiofréquence et de les vérifier.

De même, situé en sortie d'une imprimante d'étiquettes mixtes, c'est à dire une imprimante capable d'imprimer un code à barres ou d'autres type de caractères codés et capable d'encoder une puce radiofréquence, le dispositif selon l'invention permet de lire les données contenues dans le code à barres et dans la puce radiofréquence et de les comparer de façon à vérifier leur conformité.

De plus, le dispositif selon l'invention présente l'avantage d'être totalement autonome par rapport au système dans lequel il s'insère, que ce soit l'imprimante
ou l'application du système.

En outre, le dispositif selon l'invention présente l'avantage en étant portatif de pouvoir être facilement déplacé d'un comptoir d'enregistrement à un autre. Ainsi, la compagnie aérienne n'est pas obligée d'équiper toutes ces imprimantes du dispositif selon l'invention mais peut se contenter d'équiper une partie de son parc d'imprimantes.

## Revendications

1. Dispositif (10) comprenant un lecteur optique (12) de codes imprimés capable de transformer les informations d'un code imprimé sur un objet tel qu'une étiquette en données numériques, ledit objet étant muni d'un système radiofréquence comprenant une antenne (27) et une puce (28) connectées ensemble, le dispositif comprenant également une unité de dialogue radiofréquence (15) destinée à encoder la puce (28) des données numériques lues dans le code imprimé et de comparer les données numériques encodées dans la puce avec les informations du code imprimé
**caractérisé en ce que** le dispositif comprend une face arrière (39) adaptée et destinée à venir se plaquer contre une imprimante (22) d'étiquettes d'identification (20) et une ouverture (31) par lequel l'étiquette (20) passe dès sa sortie de l'imprimante (22).

2. Dispositif selon la revendication 1 comprenant un lecteur de code imprimé (12) comportant une partie optique (13) destinée à lire le code et une partie logique (14) destinée à décoder l'information lue et à la transformer en données numériques.

3. Dispositif selon la revendication 1 ou 2 dans lequel ladite partie optique (13) dudit lecteur de code (12) comprend un dispositif d'éclairage destiné à éclairer le code imprimé et un dispositif de détection de la lumière réfléchie par le code.

4. Dispositif selon la revendication 1, 2 ou 3 comprenant un microprocesseur (16) capable de traiter les données numériques en provenance de la partie logique (14) et une interface radiofréquence (17) comprise dans ladite unité de dialogue radiofréquence (15) et destinée à transmettre les informations traitées par ledit microprocesseur (16) à la puce (28) de l'étiquette (20) via une antenne (18).

5. Dispositif selon l'une des revendications 1 à 4 dans lequel ladite antenne (18) et ladite partie optique sont montées de part et d'autre de l'ouverture (31).

6. Dispositif selon l'une des revendications 1 à 5 comprenant une interface utilisateur (40).

7. Dispositif selon l'une des revendications 1 à 6 comprenant des moyens de fixation à l'imprimante (22).

8. Dispositif selon l'une des revendications 1 à 7, dans lequel la fréquence de fonctionnement est de l'ordre de 13,56 MHz.

9. Dispositif selon la revendication 7, dans lequel ladite antenne (18) comprend deux groupes de spires, un premier groupe de spires étant situé dans le plan de la base (33) du dispositif et un second groupe de spires étant situé dans la face avant (35) du dispositif de façon à ce que les deux groupes de spires sont situés sur deux plans formant un angle compris entre 45 et 135°.

10. Dispositif selon l'une des revendications 1 à 7, dans lequel la fréquence de fonctionnement est dans le domaine des Ultra Hautes Fréquences donc supérieures à 868 MHz.

## Claims

1. A device (10) featuring an optical reader (12) for printed codes capable of transforming information from a code printed on an object such as a label into digital data, said object being equipped with a radiofrequency system featuring an antenna (27) and a chip (28) connected together, the device also featuring a radiofrequency dialogue unit (15) designed to encode the chip (28) with digital data read from the printed code and to compare the digital data encoded in the chip with the information in the printed code
**characterized in that** the device includes a rear face (39) adapted and designed to press against an identification label (20) printer (22) and an opening (31) through which the label (20) passes as soon as it comes out from the printer (22).

2. The device according to claim 1 featuring a printed code reader (12) including an optical part (13) designed to read the code and a logical part (14) designed to decode the information read and to transform it into digital data.

3. The device according to claim 1 or 2 in which said optical part (13) of said code reader (12) features a lighting device designed to illuminate the printed code and a device for detecting light reflected by the code.

4. The device according to claim 1, 2 or 3 featuring a microprocessor (16) capable of processing the digital data from the logical part (14) and a radiofrequency interface (17) included in said radiofrequency dialog unit (15) and designed to transmit the information processed by said microprocessor (16) to the chip (28) of the label (20) via an antenna (18).

5. The device according to any of claims 1 to 4 in which said antenna (18) and said optical part are installed on either side of the opening (31).

6. The device according to any of claims 1 to 5 featuring a user interface (40).

7. The device according to any of claims 1 to 6 featuring systems for attachment to the printer (22).

8. The device according to any of claims 1 to 7, in which the working frequency is in the order of 13.56 MHz.

9. The device according to claim 7, in which said antenna (18) features two turn groups, a first turn group being located in the base plane (33) of the device and a second turn group being located in the front face (35) of the device so that the two turn groups are located on two planes forming an angle between 45 and 135°.

10. The device according to any of claims 1 to 7, in which the working frequency is in the Ultra High Frequency range thus greater than 868 MHz.

## Patentansprüche

1. Vorrichtung (10) mit einem optischen Lesegerät (12) für gedruckte Codes, das in der Lage ist, die Informationen eines auf einen Gegenstand wie ein Etikett gedruckten Codes in digitale Daten umzuwandeln, wobei der Gegenstand mit einem Radiofrequenzsystem versehen ist, das eine Antenne (27) und einen Chip (28) aufweist, die miteinander verbunden sind, wobei die Vorrichtung ebenfalls eine Radiofrequenz-Dialogeinheit (15) aufweist, die dazu bestimmt ist, den Chip (28) mit den im gedruckten Code gelesenen digitalen Daten zu codieren und die in den Chip codierten digitalen Daten mit den Informationen des codierten Codes zu vergleichen,
**dadurch gekennzeichnet, dass** die Vorrichtung eine Rückseite (39), die angepasst und dazu bestimmt ist, sich gegen einen Drucker (22) von Identifikationsetiketten (20) anzudrücken, und eine Öffnung (31) aufweist, durch die das Etikett (20) bei seinem Austritt aus dem Drucker (22) geht.

2. Vorrichtung nach Anspruch 1, die ein Lesegerät (12) für einen gedruckten Code besitzt, das einen optischen Teil (13), der dazu bestimmt ist, den Code zu lesen, und einen logischen Teil (14) aufweist, der dazu bestimmt ist, die gelesene Information zu decodieren und in digitale Daten umzuwandeln.

3. Vorrichtung nach Anspruch 1 oder 2, bei der der optische Teil (13) des Codelesegeräts (12) eine Beleuchtungsvorrichtung, die dazu bestimmt ist, den gedruckten Code zu beleuchten, und eine Vorrichtung zur Erfassung des vom Code reflektierten Lichts aufweist.

4. Vorrichtung nach Anspruch 1, 2 oder 3, die einen Mikroprozessor (16), der in der Lage ist, die vom logischen Teil (14) kommenden digitalen Daten zu verarbeiten, und eine Radiofrequenzschnittstelle (17) aufweist, die in der Radiofrequenz-Dialogeinheit (15) enthalten und dazu bestimmt ist, die vom Mikroprozessor (16) verarbeiteten Informationen über eine Antenne (18) an den Chip (28) des Etiketts (20) zu übertragen.

5. Vorrichtung nach einem der Ansprüche 1 bis 4, bei der die Antenne (18) und der optische Teil zu beiden Seiten der Öffnung (31) montiert sind.

6. Vorrichtung nach einem der Ansprüche 1 bis 5, die eine Benutzerschnittstelle (40) aufweist.

7. Vorrichtung nach einem der Ansprüche 1 bis 6, die Mittel zur Befestigung am Drucker (22) aufweist.

8. Vorrichtung nach einem der Ansprüche 1 bis 7, bei der die Betriebsfrequenz in der Größenordnung von 13,56 MHz liegt.

9. Vorrichtung nach Anspruch 7, bei der die Antenne (18) zwei Gruppen von Windungen aufweist, wobei eine erste Gruppe von Windungen sich in der Ebene der Basis (33) der Vorrichtung befindet und eine zweite Gruppe von Windungen sich in der Vorderseite (35) der Vorrichtung befindet, so dass die zwei Gruppen von Windungen sich in zwei Ebenen befinden, die einen Winkel zwischen 45 und 135° bilden.

10. Vorrichtung nach einem der Ansprüche 1 bis 7, bei der die Betriebsfrequenz im Bereich der Ultrahochfrequenzen liegt, also über 868 MHz.
